# EUROPÄISCHE PATENTANMELDUNG

(11) **EP 0 647 576 A1**
(43) Veröffentlichungstag der Anmeldung: **12.04.1995**
(21) Anmeldenummer: 94116097.0
(22) Anmeldetag: 12.10.1994
(51) Int. Cl.: B65G 1/137

(54) **Kommissionieranlage für flache stapelbare Waren**

(30) Priorität: 12.10.1993 DE 4334775
(71) Anmelder: SIEMENS AKTIENGESELLSCHAFT, D-80333 München (DE)
(72) Erfinder: Ketzer, Georg, Dipl.-Ing., D-82008 Unterhaching (DE); Schuster, Rudolf, Dipl.-Ing., D-85551 Kirchheim (DE)

(57) **Zusammenfassung**

Bekannte rechnergestützte Lager und Kommissioniervorrichtungen sind bezüglich ihrer Bauform, Kapazität und ihrer Zugriffszeiten zu groß, unflexibel und für die Bewegung großer Stückzahlen zu langsam. Es wird eine Kommissionieranlage mit einer Eingabezone, einer Förderguttransportvorrichtung, einer Kommissionierzone und einer Ausgabestation vorgeschlagen, bei welcher die Kommissionierzone eine Vielzahl von entlang der Förderguttransportvorrichtung angeordneten Kommissioniermodulen (1) aufweist. Die Kommissioniermodule (1) umfassen jeweils eine Vielzahl von Stapellagern mit sortenreinen Stapeln (3) und ein intelligentes Handhabungssystem. Jedes Stapellager weist mindestens zwei übereinander angeordnete und durch Zwischenplatten (4) getrennte, sortenreine Stapel (3) auf. Das Handhabungssystem erkennt die Zwischenplatten (4) und kann damit Stapel (3) mit unterschiedlichen Sorten unterscheiden. Die Stapellager ermöglichen eine hohe Packungsdichte und damit ein äußerst kompaktes Lagersystem. Die erfindungsgemäße Kommissionieranlage eignet sich insbesondere für Kompaktdisks und ähnlich flache, stapelbare Waren.

## Beschreibung

Die Erfindung betrifft eine Kommissionieranlage, in der Kompaktdisks (CD's), Kassetten oder ähnliche flache und stapelbare Waren eingelagert und entsprechend dem Umfang eines eingehenden Auftrages kommissioniert, d.h. entlagert und im Sortiment zusammengestellt ausgegeben werden. Die Überwachung und Steuerung der Anlage erfolgt über einen Rechner, der mit allen wesentlichen Untereinheiten der Anlage verbunden ist.

Bisher bekannte Lager sind in der Regel mit einer bestimmten, größtenteils festgelegten Lagerkapazität verbunden. Dabei existiert üblicherweise eine bestimmte Lagereinheit mit der entsprechenden Kapazität. Die rechnergestützte Steuerung der Einlagerung und der Auslagerung von bestimmten Gütern ist ebenfalls bekannt.

Durch die Vorgehensweise, daß bislang lediglich einzelne Komponenten, wie beispielsweise Lager, Markierungseinheiten, Ein- und Ausgabeeinheiten, sowie die Rechenanlage zu einer Gesamtanlage zusammengefügt wurden, haben sich einige Nachteile ergeben. Werden Waren oder Guter in hoher Stückzahl eingelagert, so ist bei einem einzigen großen Lager schnell eine Grenze in der Taktzahl, d.h. in der Zugriffszahl pro Zeiteinheit erreicht. Dies kann auch durch eine angepaßte Rechnersteuerung oder durch schnellere Transportsysteme beim An- und Abliefern nicht kompensiert werden. Darüber hinaus werden einzelne große Lager, die beispielsweise eine Vielzahl von gleichförmigen und gleichgroßen Waren lagern, aber zwischen unterschiedlichen Sorten unterscheiden müssen, unübersichtlich. Die hier angesprochenen Waren sind beispielsweise Kompaktdisks (CD's), die zwar stapelweise sortenrein sind, von denen aber eine enorme Anzahl verschiedener Titel differenziert zu lagern und entsprechend einem Auftrag zu kommissionieren sind.

Der Erfindung liegt die Aufgabe zugrunde, eine Kommissionieranlage für flache stapelbare Waren, insbesondere für Kompaktdisks (CD's) bereitzustellen, die sortenreine Stapel einlagern kann, die kommissionieren und ausgeben kann, eine kompakte Bauform aufweist, und in der Kapazität in einfacher Weise ausbaufähig ist.

Die Lösung dieser Aufgabe geschieht durch den Gegenstand des Anspruches 1.

Der Erfindung liegt die Erkenntnis zugrunde, daß durch die Bildung von Stapellagern mit zwei oder mehreren übereinander angeordneten sortenreinen Stapeln von Waren bei geringem Raumbedarf und hoher Packungsdichte, ein äußerst kompaktes Lagersystem realisiert werden kann. Voraussetzung für die Bildung derartiger Stapellager ist die Trennung von Stapeln unterschiedlicher Sorten durch Zwischenplatten und ein intelligentes Handhabungssystem, welches die Hohe der Stapel, die Anzahl der in einem Stapel enthaltenen Waren und die Zwischenplatten erkennen kann. Diese Erkennung kann dabei durch einfache optische Sensoren am Handhabungssystem vorgenommen werden. So kann beispielsweise eine mit einem Loch versehene Zwischenplatte durch eine einfache Lichtschranke am Handhabungssystem erkannt werden. Die Erkennung einer Zwischenplatte ermöglicht die Erkennung verschiedener sortenreiner Stapel.

Sollen beispielsweise aus einem mehrstufigen Stapellager Waren aus dem zweiten sortenreinen Stapel von oben entnommen werden, so hebt das Handhabungssystem in einem Vorbereitungslauf zunächst die oberste Zwischenplatte mit dem obersten Stapel ab und deponiert dann Zwischenplatte und Stapel auf einem freien Bereitstellungsplatz. In einem anschließenden Sammellauf entnimmt das Handhabungssystem aus dem nun zugänglichen zweiten Stapel die benötigte Anzahl von Waren, und setzt sie beispielsweise auf einem Fördergutträger der Förderguttransportvorrichtung ab. Eine Zwischenlagerung der entnommenen Waren im Handhabungssystem selbst ist ebenfalls möglich. Ein bei der Entnahme von Waren vollständig oder weitgehend abgetragener Stapel wird dann mit Hilfe des Handhabungssystems aus der Eingabezone oder gegebenenfalls aus einem Zwischenlager mit den entsprechenden Waren wieder aufgefüllt.

Vorteilhafte Ausgestaltungen der Erfindung sind den Unteransprüchen zu entnehmen.

Dabei ist insbesondere die Ausgestaltung nach Anspruch 2 hervorzuheben, gemäß welcher die Vorteile der Stapellager auch auf Zwischenlager angewandt werden. Die Zwischenlager ermöglichen andererseits eine höhere Flexibilität der Gesamtanlage.

Im folgenden wird anhand von schematischen Figuren eine Ausführungsbeispiel beschrieben.
Figuren 1a und 1b zeigen das Lagerprinzip einer Kommissionieranlage für CD's,
Figur 2 zeigt das Steuerkonzept einer Kommissionieranlage für CD's und
Figur 3 zeigt das Steuerkonzept der Kommissionieranlage in Verbindung mit dem Rechnersystem.

**Tabelle**

| CD-KOMMISSIONIERANLAGE / SYSTEMDATEN | |
|---|---|
| Kommissionierprinzip: | autarke Kommissioniermodule mit Portalroboter und intelligentem Greifsystem |
| Transportsystem: | Fördergutträger mit CD-Stapel |
| Lagerkapazität: (90 % Auslastung) | ca. 1 500 000 CD's |
| Lagerbewegungen: (3 Schichtbetrieb) | min 120.000 CD's |
| Kommissionierzone: | 25.000 Titel (sortenrein) |

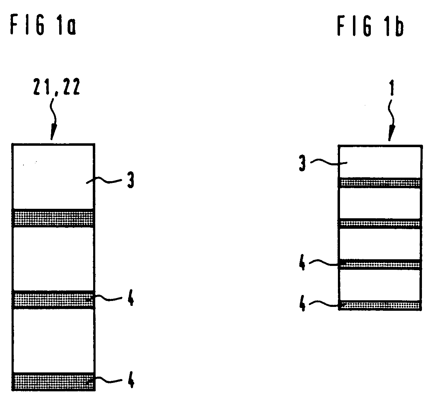

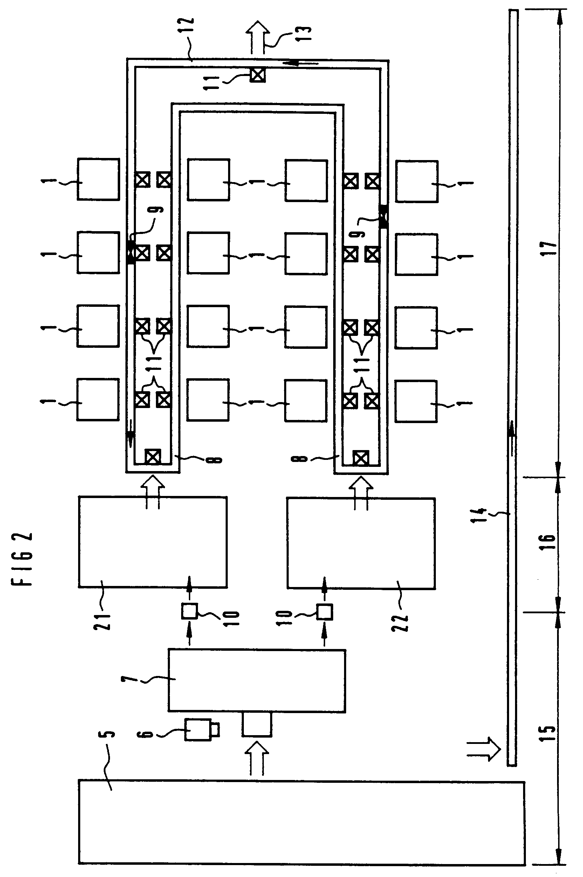

Aus den Figuren 1a und 1b ist ersichtlich, daß das Prinzip der Stapellagerung angewandt wird. Bei den einzelnen Waren 10 handelt es sich um Kompaktdisks (CD's). Figur 1a zeigt das Prinzip eines Stapellagers für die anhand der Figur 2 noch zu erläuternden Zwischenlager 21 und 22. Figur 1b zeigt das Prinzip eines Stapellagers für die anhand der Figur 2 noch zu erläuternden Kommissioniermodule 1. Dabei ist jeder Stapel sortenrein, d.h. er besteht nur aus einer Mehrzahl von einzelnen stapelfähigen Waren 10. Dies kann beispielsweise ein Stapel aus fünfzig Waren 10 mit einem einzigen Titel sein. Zu dem Lagerprinzip der CD-Kommissionieranlage gehören die Zwischenplatten 4, deren Konstruktion und Einsatz dazu dient, einen bestimmten Stapel 3 einsetzen und herausnehmen zu können. Dies geschieht über ein intelligentes Greifsystem. Das dreifach unterteilte, also dreistufige Zwischenlager 21, 22, ist in Figur 1a dargestellt. Die Figur 1b zeigt einen Kommissioniermodul 1, der vierstufig ausgebildet ist. In diesem können beispielsweise vier Stapel 3 mit jeweils zwanzig Waren 10 eingelagert werden.

Das in Figur 2 dargestellte Steuerungskonzept der CD-Kommissionieranlage zeigt im wesentlichen die mechanichen Bestandteile bzw. die größeren Untereinheiten. Auf Teile der Rechnersteuerung wird in Figur 2 kein Bezug genommen. Die grobe Unterteilung der Anlage entsprechend Figur 2 weist die Eingabezone 15, die Zwischenlagerzone 16, die Kommissionierzone 17 und die Ausgabestation 13 auf. In der Eingabezone 15 ist eine Bereitstellungsvorrichtung 5 für Waren 10 vorhanden. Entsprechend der eingetragenen breiten Pfeile werden die Waren 10 vorbei an einem Scanner 6 über eine Etikettenausgabe 7 zur Identifizierung und zur Markierung bewegt. Zur Einlagerung und künftigen Kommissionierung aus dem bzw. den Lagern heraus, werden die Waren 10 in die Zwischenlager 21, 22 bewegt. Entsprechend der vorliegenden Aufträge werden die Waren 10 zusammengestellt, also im Zwischenlager gestapelt, bis eine vorgegebene Anzahl vorhanden ist. Die Markierung der Waren 10 erfolgt in der Regel über einen Barcode.

Die zwei in Figur 2 dargestellten Zwischenlager 21, 22 sind baugleich und könnten bedarfsweise durch weitere Zwischenlager, die parallel zu den bestehenden zwei Zwischenlagern angeordnet wären, erweitert werden. Die Zwischenlager 21, 22 verfügen über ein Handhabungs- bzw. Greifsystem, so daß fertige Stapel 3 an eine Förderguttransportvorrichtung 8 mit Fördergutträgern 9 übergeben werden können. Die in Figur 2 dargestellte Logistikkette besteht zum einen aus den parallel arbeitenden Zwischenlagern 21, 22 und aus einer Vielzahl von baugleichen und entlang der Förderguttransportvorrichtung 8 aufgereihten Kommissioniermodulen 1. An allen Übergabestellen entlang dieser Logistikkette sind Lese- und Schreibstationen 11 vorgesehen. Darüber hinaus existiert eine Leerkontrolle 12, um einen leeren Fördergutträger 9 zu identifizieren.

Die Kommissioniermodule 1 stellen relativ kleine Lager dar, so daß die jeweiligen Zugriffszeiten bzw. die Taktzeiten zum Ein- oder Auslagern extrem klein gehalten werden können. Durch diese Ausbildung der Logistikkette läßt sich ein relativ kompaktes Lager erstellen, das beispielsweise, so wie in Figur 2 angedeutet, auf einer Grundflache von 50 x 35 Metern Platz findet. Die Anzahl der Kommissioniermodule 1 ist beliebig erweiterbar. Dabei werden die Zwischenlager 21, 22 über die Förderguttransportvorrichtung 8 mit jedem Kommissioniermodul 1 verbunden.

Eine auf Grund eines direkt vorliegenden Auftrages vorzunehmenden Direktkommissionierung 14 erfolgt direkt aus der Eingabezone 15 heraus, wobei die in Auftrag gegebene Ware direkt ausgegeben wird.

Ein Zwischenlager 21, 22 kann beispielsweise in dreistufiger Ausführung vorliegen, wobei bei 90%iger Auslastung ca. 330.000 CD's zwischengelagert werden können. In der Bereitstellungsvorrichtung 5 können beispielsweise daran angepaßte Lager nach der Europanorm ebenfalls bei 90%iger Auslastung ca. 380.000 CD's aufnehmen. Die Kapazität der Kommissionierzone 17 betragt beispielsweise 460.000 CD's mit einer Titelzahl bis zu 25.000. Ein einziges Kommissioniermodul 1 ist beispielsweise vierstufig ausgebildet und enthalt 1600 Titel. Die gesamte Lagerkapazität beläuft sich somit auf ca. 1,5 Mio CD's. Die Lagerbewegungen von mindestens 120.000 CD'S im Dreischichtbetrieb ermöglichen somit eine flexible Auftragsabwicklung.

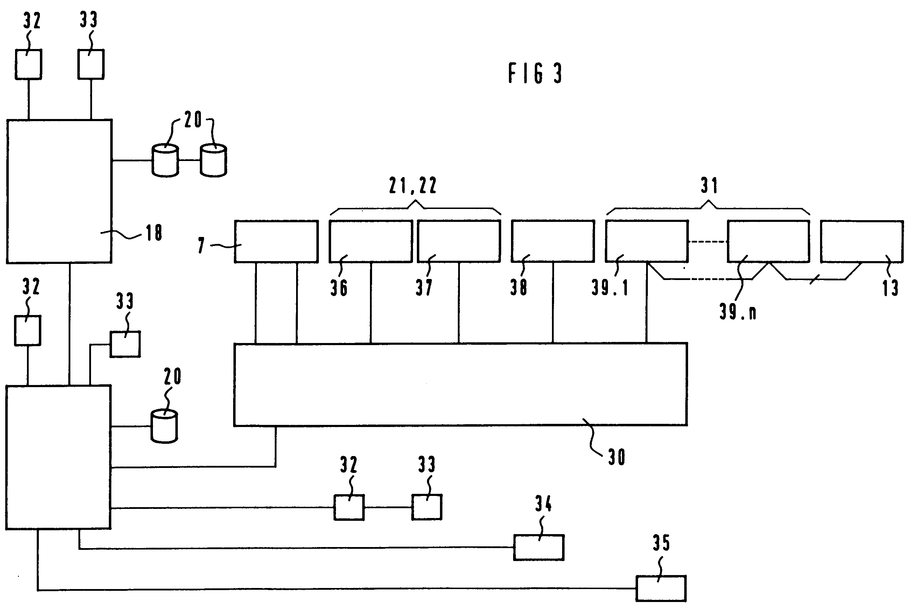

Das Steuerungskonzept der Kommissionieranlage entsprechend Figur 3 nimmt Bezug auf die Rechnerunterstützung. Eine flexible Handhabung wird wesentlich durch den Einsatz einer frei programmierbaren Steuerung 30 ermöglicht. Diese ist mit der Etikettenausgabe 7, den Dreiachsportalsystemen 36, 37 für die Handhabung der Waren 10 innerhalb der Zwischenlager 21, 22, der Fördergutsteuerung 38 und den Dreiachsportalsystemen 39.1...39.n für die Handhabung innerhalb der Kommissionierlager 31 verbunden. Die Ausgabestation 13 ist seriell an die Kommissionslager angeschlossen.

Der Arbeitsrechner 19 ist seriell mit der frei programmierbaren Steuerung 30 verbunden. Des weiteren sind seriell angeschlossen ein Monitor 32, eine Tastatur 33, beide an der Entnahmestation 13, ein Barcodeleser 34 und ein Drucker 35. Der Arbeitsrechner 19, sowie der an diesen angeschlossene Server 18 verfügen über externe Speicher, beispielsweise 500 MB, beispielsweise als Spiegelplatte für eine Datensicherung ausgeführt. Der Server 18 wird über eine Tastatur 33 und einen Kontrollmonitor 32 bedient. Am Arbeitsrechner 19 ist weiterhin ein Farbmonitor 32 vorgesehen. Die Kommissionierlager 31 entspechen den Kommissioniermodulen 1.

Das Wesentliche in dieser Logistikkette ist die Verkleinerung der Lagereinheiten in Form der Kommissioniermodule 1 und auch der Zwischenlager 21, 22, wobei ein Rechnersystem umfassend zur Steuerung eingesetzt wird. In der Kommissionierzone wird immer ein Auftrag zusammengestellt. Dabei ist es vorteilhaft, daß die Lagerung an sich in eine Zwischenlagerung und in eine Kommissionslagerung unterteilt wird. Ein Kommissioniermodul, in dem eine Stapellagerung vorgenommen wird, enthalt ein Handhabungssystem zum Transport der Stapel 3. In den Kommissioniermodulen 1 vorhandene Bereitstellungsplätze dienen einer weiteren vorübergehenden Lagerung, um beispielsweise aktuelle Kommissionieraufträge zu Ende zu führen und einen Lagervorgang aufzuschieben.

Nachdem baugleiche Module eingesetzt werden, kann durch entsprechende Multiplikation eine variable Lagerkapazität erreicht werden.

Die Erfindung ist nicht auf die Handhabung von Kompaktdisks (CD's) beschränkt, sondern kann auf Lagersysteme angewandt werden, die andere stapelfähige Waren aufnehmen. In diesem Zusammenhang sind beispielsweise Bücher oder ähnliches zu nennen.

## Patentansprüche

1. Kommissionieranlage zum rechnergestützten Lagern und Kommissionieren von flachen stapelbaren Waren (10), mit
- einer Eingabezone (15) zur Eingabe der Waren (10),
- einer der Eingabezone (15) nachgeordneten Förderguttransportvorrichtung (8) zum Weitertransport der Waren (10),
- einer Kommissionierzone (17) mit einer Vielzahl von entlang der Förderguttransportvorrichtung (8) angeordneten Kommissioniermodulen (1), die jeweils eine Vielzahl von Stapellagern mit nur einer Sorte von Waren (10) enthaltenden Stapeln (3), Bereitstellungsplatze für Waren (10) oder Stapel (3) und ein Handhabungssystem zur Übergabe von Waren (10) oder Stapeln (3) zwischen Kommissioniermodul (1) und Förderguttransportvorrichtung (8) und zur vorübergehenden Lagerung von Waren (10) oder Stapeln (3) auf den Bereitstellungsplätzen umfassen, und mit
- einer sich an die Förderguttransportvorrichtung (8) anschließenden Ausgabestation,
wobei
- jedes Stapellager mindestens zwei übereinander angeordnete und durch Zwischenplatten (4) getrennte, sortenreine Stapel (3) aufweist,
und wobei
- die Höhe der Stapel (3), die Anzahl der in einem Stapel (3) enthaltenen Waren (10) und die Zwischenplatten (4) von dem Handelssystem der Kommissioniermodule (1) erkennbar sind.

2. Kommissionieranlage nach Anspruch 1,
**gekennzeichnet durch**
- eine zwischen Eingabezone (15) und Förderguttransportvorrichtung (8) angeordnete Zwischenlagerzone (16) mit mindestens einem Zwischenlager (21,22), das eine Vielzahl von Stapellagern mit nur einer Sorte von Waren (10) enthaltenden Stapeln (3), Bereitstellungsplatze für Waren (10) oder Stapel (3) und ein Handhabungssystem zur Übergabe von Waren (10) oder Stapeln (3) zwischen Zwischenlager (21,22) und Förderguttransportvorrichtung (8) und zur vorübergehenden Lagerung von Waren (10) oder Stapeln (3) auf den Bereitstellungsplätzen umfaßt, wobei
- jedes Stapellager mindestens zwei übereinander angeordnete und durch Zwischenplatten (4) getrennte, sortenreine Stapel (3) aufweist und wobei
- die Höhe der Stapel (3), die Anzahl der in einem Stapel (3) enthaltenen Waren (10) und die Zwischenplatten (4) von dem Handhabungssystem des Zwischenlagers (21,22) erkennbar sind.

3. Kommissionieranlage nach Anspruch 1 oder 2,
**dadurch gekennzeichnet,**
daß zur Fördergutsteuerung (38) eine frei programmierbare Steuerung (30) vorhanden ist.

4. Kommissionieranlage nach Anspruch 3,
**dadurch gekennzeichnet,**
daß die freiprogrammierbare Steuerung (30) mit einem Arbeitsrechner (20) und dieser mit einem Server (18) zur Dateneingabe verbunden sind.

5. Kommissionieranlage nach einem der vorhergehenden Ansprüche,
**dadurch gekennzeichnet,**
daß jeder an der Förderguttransportvorrichtung (8) vorhandenen Übergabestelle eine Lese- und Schreibstation (11) zugeordnet ist.

6. Kommissionieranlage nach einem der Ansprüche 2 bis 5,
**dadurch gekennzeichnet,**
daß in einer der Zwischenlagerzone (16) vorgelagerten Eingabezone (15), in der die Bereitstellung der Waren (10) erfolgt, ein Scanner (6) und eine Etikettenausgabe (7) zur Identifizierung und Markierung der Waren (10) enthalten sind.

7. Kommissionieranlage nach einem der vorhergehenden Ansprüche,
**dadurch gekennzeichnet,**
daß eine Förderlinie zur Direktkommissionierung (14) vorgesehen ist, wobei eine Erfassung in der Eingabezone (15) erfolgt und ein direkter Auftrag ohne Lagerung ausführbar ist.

8. Kommissionieranlage nach einem der vorhergehenden Ansprüche,
**dadurch gekennzeichnet,**
daß jeweils eine lokale an jedem Kommissioniermodul (1) vorhandene Steuerung Standardbefehle für das entsprechende Handhabungssystem enthält, wobei ein Positionierbefehl von der zentralen Recheneinheit ausgeht.
